Europäisches Patentamt

(19) European Patent Office

Office européen des brevets

(11) **EP 1 106 587 A2**

(12) **EUROPÄISCHE PATENTANMELDUNG**

(43) Veröffentlichungstag:
**13.06.2001 Patentblatt 2001/24**

(51) Int Cl.⁷: **C04B 26/10**, C09J 5/00,
E04F 13/08

(21) Anmeldenummer: **00126125.4**

(22) Anmeldetag: **30.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **07.12.1999 DE 19958774**

(71) Anmelder: **Henkel KGaA
40589 Düsseldorf (DE)**

(72) Erfinder:
• **Thiele, Lothar, Dr.
40764 Langenfeld (DE)**
• **Herzog, Jörg
03044 Cottbus (DE)**

(54) **Steinverbundplatten**

(57) Verbundkörper aus mineralischen Formkörpern in Form von Steinplatten und einer Feststoffschicht aus einer klebstoffgebundenen Kiesschicht eignen sich für die Pflasterung von Fahr- und Gehwegen sowie von Plätzen und von Fußböden großer Hallen mit großer Fußbodenbelastung. Dabei bestehen diese Steinverbundplatten aus einer dünnen Steinplatte und einer klebstoffgebundenen Kiesschicht, wobei als Bindemittel Polyurethan-Zusammensetzungen besonders bevorzugt sind. Diese Verbundplatten weisen bessere mechanische Eigenschaften auf als bislang verwendete Stein-Beton-Platten. Die Steinverbundplatten lassen sich erheblich preisgünstiger herstellen, außerdem weisen sie ein niedrigeres Gewicht und niedrigeres Volumen auf als vergleichbare Stein-Beton-Platten oder massive Steinplatten.

EP 1 106 587 A2

**Beschreibung**

Die vorliegende Erfindung betrifft Verbundkörper aus einem mineralischen Formkörper mit einer Feststoffschicht aus klebstoffgebundenem Kies sowie ein Verfahren zur Herstellung derartiger Verbundkörper und deren Verwendung.

Für die Pflasterung von Geh- und Fahrwegen, von Plätzen oder von Hallen mit großer Bodenbelastung werden neben Betonplatten häufig Steinplatten aus natürlichen Mineralien verwendet. Derartige mineralische Formkörper bestehen häufig aus Natursteinplatten wie Marmor, Granit, Basalt oder Sandstein, insbesondere Granitplatten finden sehr häufig Verwendung. Zur Erzielung einer ausreichenden Tragfähigkeit und Biegefestigkeit müssen diese Platten für die vorgenannten Einsatzzwecke erhebliche Schichtstärken aufweisen. Neben sehr hohem Gewicht der Natursteinplatten haben sie auch noch den Nachteil, daß ihr Preis sehr hoch ist. Eine preislich günstigere Alternative ist die Verwendung von einer dünner Natursteinplatte, die auf eine Betonplatte aufgebracht ist. Hiermit wird zwar das optische Erscheinungsbild von Natursteinplatten erzielt, bei gleichen mechanischen Eigenschaften muß jedoch eine sehr dicke Betonplatte verwendet werden, so daß eine Gewichtsreduktion nicht erzielt werden kann.

Verbunde aus omamentalem oder natürlichen Steinen wie Marmor oder Granit als dünne Deckschicht mit anderen Materialien sind dem Stand der Technik bekannt. So beschreibt die WO-9748273 Verbundmaterialien bestehend aus einer etwa 1 mm dicken Deckschicht aus natürlichem Stein wie Marmor oder Granit, die mit einem Klebstoff auf eine Betonplatte aufgeklebt worden ist. Als Anwendungen für derartige Verbundmaterialien werden Deckplatten, Ausgüsse, Täfelungen und dergleichen angeben.

In ähnlicher Weise beschreibt die FR-A-2734753 ein Verbund-Konstruktionsmaterial aus natürlichem Granit und Beton.

Analog beschreibt die DE-A-4241042 Verbundziegel oder Balken bestehend aus einer Zement oder Kalk-Mörteltragschicht und einer dekorativen Deckschicht aus einem natürlichen Steinmaterial.

Auch die DE-A-4211799 beschreibt in analoger Weise Pflastersteine aus einer Betontragschicht, auf die eine Schicht von einem Naturstein mit einem Zement-Harzmörtel aufgeklebt wird.

Die DE-C-19726502 beschreibt ein Verfahren zur Herstellung von Platten oder Formteilen aus Polyisocyanaten und Polyolen, die zu einem Polyurethanschaumkunststoff reagieren, wobei unter Zumischung von Füllmitteln, Farbstoffen und dergleichen ein Steinimitat entsteht. Es wird weiterhin vorgeschlagen, daß in einem In-mould-Verfahren in einer geheizten Form das aufgeschäumte Polyurethangemisch mit einer Natursteinplatte, beispielsweise Granit oder Marmor oder einer Platte aus Metall oder Holzwerkstoff verbunden wird. Als Anwendung für diese Verbundmaterialien werden plattenförmiges Halbzeug und Raumausstattungsgegenstände genannt.

Die noch unveröffentlichte DE 19918459.3 beschreibt ein Verfahren zum Herstellen von Verbundkörpern aus mineralischen Formkörpern und geschäumten Polyurethanschichten, wobei die Schaumstoff-Zusammensetzung ein hochgefülltes Polyurethanbindemittel ist. Als Anwendung für diese Verbundkörper werden Tischplatten, Arbeitsplatten für Küchenmöbel, Fußbodenplatten für Gebäude, Terrassenplatten, Fensterbänke sowie Platten für die Verkleidung von Gebäuden oder Gehwegplatten genannt.

Die WO-9500569 beschreibt offenporige Formteile für den Baustoffbereich auf der Basis eines duromeren Polyurethans als Bindemittel für ein körniges Material. Dabei soll das Porenvolumen 30 bis 50 Volumen % betragen und eine hohe Wasserdurchlässigkeit haben. Es wird angegeben, diese Baustoff-Formteile zum Pflastern von Plätzen und Wegen verwendet werden können, um Regenwasser an Ort und Stelle versickern zu lassen.

Angesichts dieses Standes der Technik sollten Formteile entwickelt werden, die es ermöglichen, die hochpreisigen schweren mineralischen Formkörper in ihrer Dicke drastisch zu reduzieren. Dabei sollten diese Steinverbundplatten auf einfache Weise herstellbar sein und so zu verlegen sein, wie die üblichen massiven Steinplatten. Außerdem sollten die Steinverbundplatten eine hohe Qualität sowohl bezüglich der mechanischen Eigenschaften als auch bezüglich ihres Aussehens im Vergleich zu massiven natürlichen mineralischen Steinplatten aufweisen.

Die erfindungsgemäße Lösung ist den Patentansprüchen zu entnehmen. Sie besteht im Wesentlichen in der Bereitstellung einer Feststoffschicht aus einer klebstoffgebundenen Kiesschicht, die mit einer Schicht des mineralischen Formkörpers einen Verbundkörper bildet.

Diese Feststoffschicht besteht dabei aus einem Klebstoff-Bindemittel auf der Basis von reaktiven Polyurethanen, Epoxiden, ungesättigten Polyestern oder (Meth)acrylaten und kann ggf. auf der dem mineralischen Formkörper zugewandten Seite und/oder auf der dem mineralischen Formkörper abgewandten Seite eine Verstärkungsmatte oder ein Verstärkungsvlies enthalten.

Ein weiterer Gegenstand der vorliegenden Erfindung ist ein Verfahren zu Herstellung derartiger Verbundkörper sowie deren Verwendung für die Pflasterung und Befestigung von Geh- und Fahrwegen, Plätzen oder Hallen.

Als Polymermatrix für die Feststoffschicht können dabei eine Vielzahl von Klebstoff-Bindemitteln eingesetzt werden, die zur Bildung einer duromeren Polymer-Matrix befähigt sind. Als bevorzugte reaktive Bindemittelsysteme seien hier beispielhaft ungesättigte Polyester, Epoxide, Methacrylate, Acrylate und ganz besonders Polyurethane genannt.

Ungesättigte Polyester-Bindemittel sind bekanntlich auf der Basis von gesättigten und olefinisch ungesättigten dibasischen Säuren, wie z.B. Phthalsäure, Isophthalsäure, Maleinsäure, Adipinsäure, aufgebaut. Als mitverwendete Glykole seien beispielhaft Propylenglycol, Ethylenglykol, Diethylenglycol und ähnliche niedermolekulare Diole genannt. Ein weiterer wesentlicher Bestandteil der ungesättigten Polyester ist das Styrol sowie ein Polymerisationsinhibitor als Stabilisator und freiradikalische Polymerisationsstarter auf der Basis von Peroxiden oder Azoverbindungen ggf. in Kombination mit Beschleunigern.

Als Epoxidbindemittel können dabei eine Vielzahl von kommerziell erhältlichen Epoxidharzen eingesetzt werden, beispielhaft erwähnt seien die Glycidylether des Bisphenols A, des Bisphenols F sowie von Novolaken. Als Härterkomponente können dabei sowohl Dicarbonsäuren, Dicarbonsäureanhydride als auch insbesondere Di- und Polyamine verwendet werden. Die Epoxidharz-Bindemittel können dabei sowohl in flüssiger Form als Substanz als auch als wässrige Dispersion eingesetzt werden.

Als (Meth)acrylat-Bindemittel können dabei Monomeren- und/oder Oligomerengemische von Estern der Methacrylsäure bzw. der Acrylsäure eingesetzt werden. Beispielhaft erwähnt seien die C1 - C6 Alkylester der Methacrylsäure oder der Acrylsäure, es können jedoch auch zumindest anteilsweise Di- oder Polyester der (Meth)acrylsäure mit Etylenglykol, Diethylenglykol, Triethylenglykol, den entsprechenden Propylenglykolen oder Polyurethan-Polyolen eingesetzt werden. Weiterhin können Umsetzungsprodukte der (Meth)acrylsäure mit den oben genannten Polyepoxiden eingesetzt werden. Als Polymerisationsstarter können dabei alle freiradikalischen Systeme auf der Basis von Peroxiden oder Azoverbindungen, ggf. unter Zusatz von Beschleunigern, eingesetzt werden.

Ganz besonders bevorzugt können Polyurethan-Bindemittel verwendet werden, die im wesentlichen aus einem Reaktionsprodukt mindestens eines Polyols mit mindestens einem Polyisocyanat aufgebaut sind. Die Polyole können dabei ganz oder teilweise durch Polyamine oder polyfunktionelle Aminoalkohole ersetzt werden.

Die Polyisocyanate sind mehrfunktionell, vorzugsweise enthalten die geeigneten mehrfunktionellen Isocyanate im Mittel 2 bis höchstens 5, vorzugsweise bis 4 und insbesondere 2 oder 3 Isocyanat-Gruppen pro Molekül. Die zu verwendenden Polyisocyanate können aromatische, cycloaliphatische oder aliphatische Isocyanate sein.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-diisocyanat, Diphenylmethan-4,4'-diisocyanat (MDI), Diphenylmethan-2,4'-diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat ($H_{12}$MDI), 1-Isocyanatomethyl-3-isocyanato-1,5,5-trimethylcyclohexan (Isophoron-Diisocyanat, IPDI), Cyclohexan-1,4-diisocyanat, hydriertes Xylylen-diisocyanat ($H_6$XDI), 1-Methyl-2,4-diisocyanato-cyclohexan, m- oder p-Tetramethylxylendiisocyanat (m-TMXDI, p-TMXDI) und Dimerfettsäure-diisocyanat. Beispiele für aliphatische Polyisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, sowie 1,12-Dodecandiisocyanat ($C_{12}$DI).

Im allgemeinen werden aromatische Isocyanate bevorzugt, vorzugsweise das Diphenylmethandiisocyanat, entweder in Form der reinen Isomeren, als Isomerengemische der 2,4'-/4,4'-Isomeren oder auch das mit Carbodiimid verflüssigte MDI, das z.B. unter dem Handelsnamen Isonate 143 L bekannt ist, sowie das sogenannte "Roh-MDI", d. h. eine Isomeren/Oligomerenmischung des MDI, wie sie z.B. unter dem Handelsnamen PAPI bzw. Desmodur VK im Handel erhältlich sind. Weiterhin können sogenannte "quasi-Prepolymere", d.h. Umsetzungsprodukte des MDI bzw. des TDI mit niedermolekularen Diolen, wie z.B. Ethylenglykol, Diethylenglykol, Propylenglykol, Dipropylenglykol oder Triethylenglykol verwendet werden. Diese quasi Prepolymeren stellen bekanntlich eine Mischung der vorgenannten Umsetzungsprodukte mit monomeren Diisocyanaten dar. Neben den vorgenannten aliphatischen und cycloaliphatischen Isocyanaten sind auch deren Isocyanuratisierungsprodukte bzw. Biuretisierungsprodukte, insbesondere die des HDI bzw. IPDI einzusetzen.

Prinzipiell sind alle Polyole, die bereits zur Polyurethanherstellung bekannt sind, auch für die vorliegende Erfindung geeignet. In Betracht kommen insbesondere die an sich bekannten Polyhydroxy-Polyether des Molekulargewichtsbereiches von 200 bis 10.000, vorzugsweise 400 bis 6.000, mit 2 bis 10 Hydroxylgruppen pro Molekül. Derartige Polyhydroxypolyether werden in an sich bekannter Weise durch Alkoxylierung von geeigneten Startermolekülen erhalten, z. B. von Wasser, Propylenglykol, Glycerin, Trimethylolpropan, Sorbit, Rohrzucker usw. Geeignete Alkoxylierungsmittel sind insbesondere Propylenoxid und eventuell auch Ethylenoxid.

Vorzugsweise eignen sich die flüssigen Polyhydroxyverbindungen mit zwei bzw. drei Hydroxylgruppen pro Molekül, wie z.B. di- und/oder trifunktionelle Polypropylenglykole im Molekulargewichtsbereich von 200 -bis 6000, vorzugsweise im Bereich von 400 bis 3000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole, die z.B. durch die saure Polymerisation von Tetrahydrofuran hergestellt werden; dabei liegt der Molekulargewichtsbereich der Polytetramethylenglykole zwischen 200 und 6000, vorzugsweise im Bereich von 400 bis 4000.

Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Hexahydrophthalsäure oder Phthalsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, 1,10-Decandiol, Glyzerin oder Trimethylolpropan hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonatpolyole und Dimerdiole (Fa. Henkel) sowie insbesondere Rizinusöl und dessen Derivate. Auch die Hydroxy-funktionellen Polybutadiene, wie sie z.B. unter dem Handelsnamen "Polybd" erhältlich sind, können für die erfindungsgemäßen Zusammensetzungen als Polyole eingesetzt werden.

Insbesondere ist die Polyol-Komponente eine Diol/Triol-Mischung aus Polyether-und Polyesterpolyolen.

Als Katalysatoren können eine Vielzahl von gängigen Polyurethankatalysatoren eingesetzt werden, beispielhaft erwähnt seien Zinn(II)salze von Carbonsäuren, wie Zinn-II-acetat, -ethylhexoat und -diethylhexoat oder Dialkyl-Zinn(IV)-Carboxylate, deren Carbonsäuren mindestens 2, vorzugsweise wenigstens 10, insbesondere 14 bis 32 C-Atome haben. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie insbesondere 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonyl-ethyl)zinndilaurat und Bis(β-acetyl-ethyl)zinndilaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinntris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl-und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2-ethylhexoat) mit der allgemeinen Formel $R_{n+1}Sn(SCH_2CH_2OCOC_8H_{17})_{3-n}$, wobei R eine Alkylgruppe mit 4 bis 8 C-Atomen ist, Bis(β-methoxycarbonylethyl)zinn-bis(thioethylenglykol-2-ethylhexoat), Bis(β-methoxycarbonyl-ethyl)-zinn-bis(thioglykolsäure-2-ethylhexoat), und Bis(β-acetyl-ethyl)zinn-bis(thioethylenglykol-2-ethylhexoat) und Bis(β-acetyl-ethyl)zinn-bis(thioglykolsäure-2-ethylhexoat).

Zusätzlich geeignet sind auch aliphatische tertiäre Amine insbesondere cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Konkret genannt seien:
Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan(Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2'-Dimorpholinodiethylether (DMDEE), 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorborane, Texacat DP-914 (Texaco Chemical), N,N,N,N-Tetramethylbutan-1,3-diamin, N,N,N,N-Tetramethylpropan-1,3-diamin, N,N,N,N-Tetramethylhexan-1,6-diamin, 1-Methylimidiazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholino-pyridin, 4-Methylpyridin und N-Dodecyl-2-Methyl-imidazol.

Für die Vernetzung des Polyurethangerüstes kann auch die Trimerisierungsreaktion der Isocyanatgruppen mit sich selbst bzw. deren Reaktion mit Urethan- und Harnstoffgruppen zu Allophanat- bzw. Biuret-Gruppen erfolgen. Hierzu können Trimerisierungskatalysatoren verwendet werden. Als Trimerisierungskatalysator sei beispielhaft DABCO TMR-2 der Firma Air Products genannt, wobei es sich bei diesen Produkten um in Ethylenglykol gelöste quaternäre Ammoniumsalze handelt. Es können auch Kombinationen der vorgenannten Katalysatoren verwendet werden, insbesondere sei hier die Kombination der cyclischen und/oder tertiären Aminoverbindungen mit den zinnorganischen Verbindungen genannt. Die Katalysatoren werden dabei in einer Konzentration von 0,05 bis 15, insbesondere von 0,5 bis 10 Gew.% eingesetzt, bezogen auf die Summe von Hydroxyl-Verbindungen und Polyisocyanat.

Die Menge der Reaktionspartner Polyisocyanat, Polyol und ggf. Polyamin wird so gewählt, daß das Polyisocyanat im Überschuß eingesetzt wird. Das Äquivalentverhältnis von NCO- zur Summe aus OH- und Aminogruppen beträgt 5:1, bis 1,2:1, ganz besonders bevorzugt ist ein stöchometrischer Isocyanat-Überschuß von etwa 5 bis 50 %.

Je nach den konkreten Anwendungen kann es angebracht sein, daß Polyurethan-Bindemittel gegen Abbau zu stabilisieren. Als Antioxidantien eignen sich dabei insbesondere die Antioxidantien vom Typ der sterisch gehinderten Phenole in Mengen bis zu 1,5 Gew.% bezogen auf das Bindemittel. Beispielhaft erwähnt seien hier die Produkte, die unter dem Handelsnamen Irganox 1010, 1076, 3114 oder 1425 von der Firma Ciba Specialty Chemicals sowie unter dem Handelsnamen Topanol O der Firma ICI oder Goodrite 3114 von der Firma B.F. Goodrich im Handel erhältlich sind.

Das Bindemittel der Feststoffschicht enthält einen sehr hohen Anteil an Füllstoff. Als Füllstoff eignen sich im Prinzip Kaolin, Feldspat, Glimmer, Quarzmehl, Bariumsulfat, Aluminiumoxide, Aluminiumhydroxide sowie Calciumcarbonat sowohl als Kalkspat als auch als Kalkstein. Ganz besonders eignet sich dabei Kies mit speziellen Sieblinien, die verdichtungsfähig sind und dabei Feinsandanteile enthalten. Diese Sieblinien sind in der DIN 4226 als Zuschlag für Beton mit dichtem Gefüge definiert. Dabei hängt die maximale Korngröße von der Dicke der Kiesschicht der herzustellenden Verbundplatte ab. Für die maximale Korngröße gilt dabei die Beziehung

$$\text{Korngröße} = \frac{\text{Schichtdicke}}{10}.$$

Dabei dient der Füllstoff nicht nur dazu, das Volumen zu erhöhen, sondern auch dazu, die technische Verwendbarkeit zu verbessern, so steigen die Biegezugfestigkeit und Druckfestigkeit des Verbundkörpers in besonders starkem Maße, wenn Kies mit definierter Sieblinie, beispielsweise mit einer Partikelgröße von 0 bis 4 mm mit Feinsandanteil verwendet wird. Ganz besonders geeignet für die Herstellung von Platten ist Kies der Korngruppe 0/4, insbesondere 0/4a entsprechend DIN 4226 Teil 1. Dabei soll der Durchgang der Kiesfraktion durch die Siebe mit 0,125 und 0,25 mm Maschenweite zusammen mindestens 10 % und der Rückstand auf dem Sieb mit 0,5 mm Maschenweite mehr als 20% betragen. Das Mischungsverhältnis von Kies : Klebstoff-Bindemittel beträgt dabei vorzugsweise 3:1 bis 20:1 Gewichtsteile.

Als mineralische Formkörper eignen sich Platten aus den Ergußgesteinen Granit, Basalt, Sylenit, Diabas, Tuff, Siparit, Diorit, Andesit, Tikrit sowie Sandstein als Beispiel für ein Sedimentgestein oder Marmor als Beispiel für metamorphe Gesteine. Insbesondere eignen sich Platten aus Granit. Die Dicke der verwendeten Steinplatte richtet sich nach dem Einsatzzweck sowie insbesondere nach der zu erwartenden Belastung. Übliche Dicken für die Steinplatten liegen zwischen 3 und 60 mm, vorzugsweise zwischen 10 und 40 mm. Die dazu gehörige Feststoffschicht aus der klebstoffgebundenen Kiesschicht hat in der Regel eine Dicke zwischen 10 und 80 mm, vorzugsweise zwischen 20 und 60 mm.

Um eine gute Haftung zwischen Steinplatte und der Feststoffschicht zu erreichen, kann es notwendig sein, daß auf die Steinplatte ein Klebstoff aufgetragen wird. Dieser Klebstoff kann dabei jeder an sich bekannte Strukturklebstoff auf Basis von Polyurethanen, Epoxiden, ungesättigten Polyestern und/oder (Meth)acrylaten sein, bevorzugt wird hierbei ein Polyurethanklebstoff, der im wesentlichen die Bestandteile des vorgenannten Bindemittelsystems enthält.

Zwischen Steinplatte und der Kies-Klebstoff-Bindemittelschicht der Feststoffplatte kann eine Verstärkungsmatte bzw. ein Verstärkungsvlies eingebracht werden, um die Stabilität der Verbundplatte zu erhöhen. Es kann auch zweckmäßig sein, eine derartige Verstärkungsmatte oder ein derartiges Verstärkungsvlies auf der der Steinplatte abgewandten Seite der Feststoffschicht anzubringen. Diese Verstärkungsmatte kann dabei aus Glasfasergewebe, Glasfaservlies oder aus synthetischen oder natürlichen Fasermaterialien bestehen.

Zur besseren Einarbeitung der Füllstoffe kann die Bindemittel-Zusammensetzung ggf. Netz- und Dispergiermittel enthalten.

Es kann weiterhin sinnvoll sein, die Polyolkomponente des Bindemittels mit einem Trockenmittel in Form von Molekularsieb-pasten auf der Basis von Natrium-Aluminium-Silikaten zu versehen. Bei sehr hohen oder schwankenden Wassergehalten kann es notwendig sein, die Füllstoffe vorher zu trocknen.

Die erfindungsgemäßen Steinverbundplatten eignen sich für die Pflasterung von Fahr- und Gehwegen, sowie von Plätzen und für die Fußbodengestaltung von großen Hallen mit hoher Bodenbelastung. Dabei weisen die Steinverbundplatten weitestgehend die gleichen mechanischen Eigenschaften auf wie bislang verwendete massive Steinplatten oder Stein-Betonplatten. Im Vergleich zu massiven Steinplatten führt der Einsatz der Steinverbundplatten mit Kiesschicht zu einer beträchtlichen Preisreduzierung und zur Einsparung natürlichen Ressourcen. Außerdem ergibt sich eine Einsparung an Volumen und Gewicht.

Die Erfindung soll im folgenden durch ein Ausführungsbeispiel näher erläutert werden, wobei dieses Ausführungsbeispiel nicht den gesamten Umfang des Schutzbereiches darstellt, dieser wird vielmehr durch die Ansprüche definiert.

**Beispiel**

| Kies-Zusammensetzung | |
|---|---|
| Maschinenweite in mm | Siebrückstand in % |
| 4,0 | 2,08 |
| 2,0 | 22,81 |
| 1,0 | 31,14 |
| 0,5 | 28,79 |
| 0,25 | 4,21 |
| 0,125 | 10,77 |
| 0,063 | 0,14 |
| 0,00 | 0,006 |

| **Klebstoffzusammensetzung** | | |
|---|---|---|
| a) | Polyolkomponente | Massenanteile in % |
| | Rizinusöl | 53,00 |
| | Polypropylenglykol, trifunktionell, $M_w$ 450 | 35,00 |
| | Glyzerin | 5,00 |
| | Na-Al-Silikatpaste | 6,98 |
| | Dibutylzinndilaurat | 0,02 |
| b) | Isocyanatkomponente | |
| | Diphenylmethan-4,4'-diisocyanat (Roh-MDI) | 85,00 |

Kies und Polyolkomponente werden im Mischungsverhältnis 135 : 10 vermischt. Diesem Gemisch wird das Isocyanat zugesetzt, und es wird erneut homogenisiert. Das Verhältnis Polyol zu Isocyanat liegt bei 100: 85. Dieses Gemisch wird in eine mit Trennmittel imprägnierte Form gegeben. Auf dem Boden dieser Form befindet sich eine 3 cm dicke Granitplatte. Nach Einbringen des Reaktionsgemisches in die Form und Härtung bei 60°C kann nach 30 min die Steinverbundplatte entformt werden.

Nach vollständiger Aushärtung wurden an der Steinverbundplatte im Vergleich zum einer massiven Granitplatte und einer Granit-Beton-Platte die folgenden Festigkeiten genmessen:

| | Granit | Granit - Beton | Granit - Kies |
|---|---|---|---|
| Dicke in cm | 16 | 4 - 12 | 3 - 5 |
| Dichten in g/cm$^3$ | 2,6 - 2,8 | 2,5 - 2,6 (Verbundplatte) | ca. 1,6 (Verbundplatte) |

Die Festigkeit der verklebten Kiesschicht erlaubt die Herstellung einer dünneren Platte im Vergleich zur massiven Granitplatte für gleiche Einsatzzwecke.

| | Granit | Beton | Kies-Klebstoff |
|---|---|---|---|
| Biegezugfestigkeit [1] In N/mm$^2$ | 16 | 10 | 24,5 |
| Druckfestigkeit [1] | 168 | 64 | 91 |

[1] Prüfkörper: 40 x 40 x 160 mm

Die Granit-Kies-Verbundplatte kann mit 100 kN Einzellast mittig und außermittig belastet werden, wobei die Biegung der Platte < 0,1 mm für beide Lastfälle ist und keine Zerstörung auftritt. Die Platte widersteht auch Biegezugbelastungen von 100 kN ohne Anrisse.

Damit sind diese Platten für Plätze und Gebäude geeingnet, die von Schwerlastzügen u.ä. befahren werden.

**Patentansprüche**

1. Verbundkörper aus mineralischen Formkörpern mit einer Feststoffschicht dadurch gekennzeichnet, daß die Feststoffschicht aus einer klebstoffgebundenen Kiesschicht besteht.

2. Verbundkörper nach Anspruch 1 dadurch gekennzeichnet, daß als Klebstoff-Bindemittel Klebstoffe auf der Basis von reaktiven Polyurethanen, Epoxiden, ungesättigten Polyestern oder (Meth)acrylaten verwendet werden.

3. Verbundkörper nach Anspruch 2, dadurch gekennzeichnet, daß das Bindemittel aus Polyisocyanaten, Polyolen, Polyaminen und ggf. aus Aminoalkoholen, Katalysatoren sowie Netz- und Dispergiermitteln besteht.

4. Verbundkörper nach Anspruch 2, dadurch gekennzeichnet, daß das Bindemittel aus 2-komponentigen Epoxidharzsystemen oder Epoxiddispersionen besteht.

5. Verbundkörper nach mindestens einem der vorhergehenden Ansprüche dadurch gekennzeichnet, daß eine verdichtungsfähige Kiesfraktion mit Feinsandanteilen verwendet wird, die gemäß DIN 4226 als Zuschlag für Beton mit dichtem Gefüge definiert ist.

6. Verbundkörper nach Anspruch 5, dadurch gekennzeichnet, daß die Korngrößenverteilung des Kieses der Korngruppe 0/4 und insbesondere der Korngruppe 0/4a gemäß DIN 4226 Teil 1 entspricht.

7. Verbundkörper nach Anspruch 1 bis 6, dadurch gekennzeichnet, daß das Mischungsverhältnis zwischen Kies und Klebstoff-Bindemittel 3:1 bis 20:1 Gewichtsteile beträgt.

8. Verfahren zur Herstellung von Verbundkörpern, dadurch gekennzeichnet, daß

   a) der mineralische Formkörper mit einer aushärtenden Schicht aus Kies und Bindemittel gemäß Anspruch 2 bis 7 beschichtet wird und
   b) diese Schicht, ggf. unter Erwärmen ausgehärtet wird.

9. Verfahren nach Anspruch 8, dadurch gekennzeichnet, daß an der Grenzschicht zwischen mineralischem Formkörper und Kies-Bindemittelschicht eine Verstärkungsmatte oder ein Verstärkungsvlies eingebracht wird.

10. Verfahren nach Anspruch 8 oder 9, dadurch gekennzeichnet, daß die dem mineralischen Formkörper abgewandte Seite der Kies-Bindemittelschicht mit einer Verstärkungsmatte oder einem Verstärkungsvlies versehen wird.

11. Verfahren zur Herstellung von Verbundkörpern dadurch gekennzeichnet, daß zunächst ein Formkörper aus Kies und Bindemittel gemäß Anspruch 2 bis 7 hergestellt wird, der anschließend mit Hilfe eines Klebstoffes auf Basis von reaktiven Polyurethanen, Polyepoxiden, ungesättigten Polyestern oder (Meth)acrylaten kraft- und formschlüssig auf den mineralischen Formkörper aufgeklebt wird.

12. Verfahren nach Anspruch 11, dadurch gekennzeichnet, daß die dem mineralischen Formkörper zugewandte und/oder abgewandte Seite des Kies-Bindemittelformkörpers mit einer Verstärkungsmatte oder einem Verstärkungsvlies versehen wird.

13. Verwendung der Verbundkörper gemäß Anspruch 1 bis 7 für die Pflasterung von Geh- und Fahrwegen, Plätzen oder Hallen.